(19) Europäisches Patentamt
European Patent Office
Office européen des brevets

(11) **EP 3 632 962 A1**

(12) **EUROPEAN PATENT APPLICATION**

(43) Date of publication:
**08.04.2020 Bulletin 2020/15**

(51) Int Cl.:
***C08H 7/00*** *(2011.01)*

(21) Application number: **18198997.1**

(22) Date of filing: **05.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Rockwool International A/S**
**2640 Hedehusene (DK)**

(72) Inventors:
• **JOHANSSON, Dorte Bartnik**
**4000 Roskilde (DK)**

• **JOHANSSON, Ib**
**8240 Risskov (DK)**
• **KILSGAARD, Björn Sjögren**
**8000 Aarhus C (DK)**
• **NIKOLIC, Miroslav**
**8000 Aarhus C (DK)**

(74) Representative: **Letzelter, Felix Phillip**
**Meissner Bolte Patentanwälte**
**Rechtsanwälte Partnerschaft mbB**
**Widenmayerstraße 47**
**80538 München (DE)**

(54) **METHOD FOR PRODUCING OXIDIZED LIGNINS**

(57) The invention is directed to a method for producing oxidized lignins.

**Fig. 1**

EP 3 632 962 A1

## Description

### Field of the Invention

The present invention relates to a method for producing oxidized lignins, an oxidized lignin prepared by such a method and the use of such oxidized lignins as a component in a binder composition, such as an aqueous binder composition for mineral fibres.

### Background of the Invention

Lignin is a class of complex organic polymers found as structural materials in vascular plants. It forms about 20-35 % of the dry mass of wood and is therefore, except cellulose, the most abundant polymer found in nature. Lignin is a side product in the process of paper making and therefore vast amounts of lignin are produced in the paper making industry. The lignin separated in the paper making process is usually burnt as fuel. In view of this, lignin is a very inexpensive product which makes it an attractive starting material.

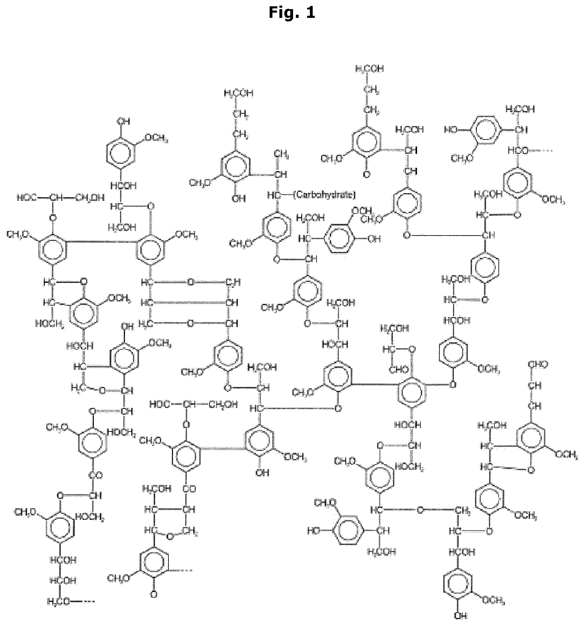

Fig. 1 shows a section from a possible lignin structure.

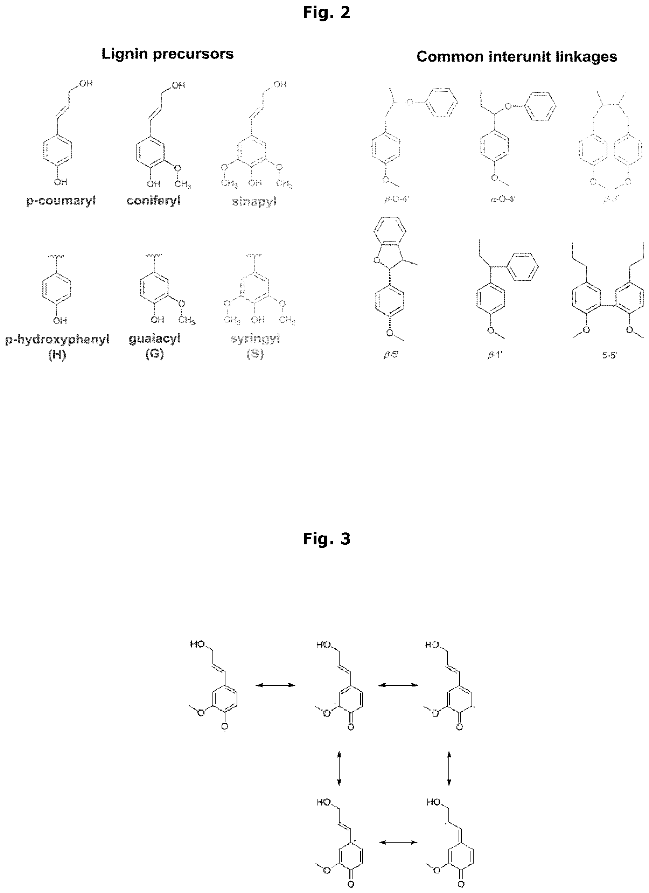

Accordingly, lignin represents an attractive feedstock due to availability and potentially low price. It is also the main renewable aromatic source. Lignin is composed of three primary units (often called monolignols) linked through ether and C-C bonds (Figure 2). Representation of these three monolignols depends on the source material although guaiacyl (G) is the most abundant in softwood lignin, guaiacyl and syringyl in hardwood lignin while all three are fairly represented in grasses.

One potential use of lignins is the use in binders, such as binders for mineral fibres.

There are several important characteristics of lignin in relation to binders. Lignin is an aromatic polymer with high glass transition temperature ($T_g$). Lignin thermally decomposes over a wide range of temperatures as different oxygen containing moieties possess different stability and reactions that are occurring can be consecutive but also competing due to hindered structure of lignin polymer. Lignin surface chemistry properties (like surface tension components) are similar to the same properties of cured phenol formaldehyde (PF) binders. This situation makes the reasonable assumption that adhesion properties of lignin can be at the similar level as those of long time used PF binders in insulation materials but also in binding wood etc. However, lignin is an inherently heterogeneous material and on top of that, the lignin properties and structures are different based on various techniques being employed in extracting lignin from biomass. The differences come in terms of structure, bonding pattern of lignin aromatic units, molecular weight etc.

The reactive functional group being present in high amounts in a typical lignin is the hydroxyl group, being either phenolic or aliphatic hydroxyl group. The presence of phenolic hydroxyl group also activates the aromatic ring towards reactions with aldehydes. Overall, it can be said that lignin structure limits the choice of cross-linkers to most often environmentally compromised reagents and therefore limits the possibility to use lignin as a starting material in processes which include chemical reactions.

In order to utilize lignins as starting materials for different uses, chemical derivatizations of lignins have been proposed. One of the proposed ways of derivatizing lignin is oxidation. Oxidation of lignin is usually carried out with strong oxidation agents in the presence of alkali metal hydroxides.

However, one problem associated with the previously known oxidized lignins is that they are less fire resistant when used in products where they are comprised in a binder composition, compared to the underivatized lignins, said underivatized lignins rendering them unsuitable for many applications. A further problem associated with these previously known oxidized lignins is that residual alkali metal hydroxide in the product tends to render the products unstable and makes them susceptible to changing their properties in an aging process.

### Summary of the Invention

Accordingly, it was an object of the present invention to provide a process for the derivatization of lignins which overcomes the disadvantages of previously known derivatization processes of a lignin.

In particular, it was an object of the present invention to provide a process for the derivatization of lignins that result in derivatized lignins having desired reactivity and at the same time are more fire resistant when used in products where they are comprised in a binder composition, compared to underivatized lignins, and further having improved long term stability.

A further object of the present invention was to provide derivatized lignins prepared according to the method.

A further object of the present invention was to provide a use for derivatized lignins prepared according to the method.

In accordance with a first aspect of the present invention, there is provided a method for producing oxidized lignins comprising bringing into contact

- a component (i) comprising one or more lignins
- a component (ii) comprising ammonia, one or more amine components, and/or any salt thereof.
- a component (iii) comprising one or more oxidation agents.

In accordance with a second aspect of the present invention, there is provided an oxidized lignin prepared by a method according to the present invention.

In accordance with a third aspect of the present invention, there is provided a use of the oxidized lignins prepared by the method according to the present invention in a binder composition, such as an aqueous binder composition for mineral fibres.

## Description of the Preferred Embodiment

The method according to the present invention is a method for producing oxidized lignins comprising bringing into contact

- a component (i) comprising one or more lignins
- a component (ii) comprising ammonia, one or more amine components, and/or any salt thereof.
- a component (iii) comprising one or more oxidation agents.

The present inventors have surprisingly found that by such derivatization process, derivatized lignins can be produced which have advantageous properties over previously known derivatized lignins.

The present inventors have surprisingly found that by using ammonia, one or more amino components, and/or any salt thereof as an alkalization agent instead of the previously used alkali metal hydroxides, derivatized lignins can be provided, that have a desired reactivity profile and at the same time avoid the disadvantages of previously known oxidized lignins, in particular in terms of improved fire resistance when used in products where they are comprised in a binder composition, over previously known oxidized lignins and improved long term stability over previously known oxidized lignins.

### Component (i)

Component (i) comprises one or more lignins.

In one embodiment of the method according to the present invention, component (i) comprises one or more kraft lignins, one or more soda lignins, one or more lignosulfonate lignins, one or more organosolv lignins, one or more lignins from biorefining processess of lignocellulosic feedstocks, or any mixture thereof.

In one embodiment, component (i) comprises one or more kraft lignins.

### Component (ii)

In one embodiment according to the present invention, component (ii) comprises ammonia, one or more amino components, and/or any salts thereof. Without wanting to be bound by any particular theory, the present inventors believe that replacement of the alkali hydroxides used in previously known oxidation processes of lignin by ammonia, one or more amino components, and/or any salts thereof, plays an important role in the improved properties of the oxidized lignins prepared according to the method of the present invention.

The present inventors have surprisingly found that the lignins oxidized by an oxidation agent in the presence of ammonia or amines contain significant amounts of nitrogen as a part of the structure of the oxidized lignins. Without wanting to be bound to any particular theory, the present inventors believe that the improved fire resistance properties of the oxidized lignins when used in products where they are comprised in a binder composition, said oxidised lignins prepared by the method according to the present invention, are at least partly due to the nitrogen content of the structure of the oxidized lignins.

"Ammonia-oxidized lignins" is to be understood as a lignin that has been oxidized by an oxidation agent in the presence of ammonia. The term "ammonia-oxidized lignin" is abbreviated as AOL.

In one embodiment, component (ii) comprises ammonia and/or any salt thereof.

Without wanting to be bound by any particular theory, the present inventors believe that the improved stability properties of the derivatized lignins prepared according to the present invention are at least partly due to the fact that ammonia is a volatile compound and therefore evaporates from the final product or can be easily removed and reused. In contrast to that, it has proven difficult to remove residual amounts of the alkali hydroxides used in the previously known oxidation process.

Nevertheless, it can be advantageous in the method according to the present invention that component (ii), besides ammonia, one or more amino components, and/or any salts thereof, also comprises a comparably small amount of an alkali and/or earth alkali metal hydroxide, such as sodium hydroxide and/or potassium hydroxide.

In the embodiments, in which component (ii) comprises alkali and/or earth alkali metal hydroxides, such as sodium hydroxide and/or potassium hydroxide, as a component in addition to the ammonia, one or more amino components, and/or any salts thereof, the amount of the alkali and/or earth alkali metal hydroxides is usually small, such as 5 to 70 weight parts, such as 10 to 20 weight parts alkali and/or earth alkali metal hydroxide, based on ammonia.

Component (iii)

In the method according to the present invention, component (iii) comprises one or more oxidation agents.

In one embodiment, component (iii) comprises one or more oxidation agents in form of hydrogen peroxide, organic or inorganic peroxides, molecular oxygen, ozone, halogen containing oxidation agents, or any mixture thereof.

In the initial steps of the oxidation, active radicals from the oxidant will typically abstract the proton from the phenolic group as that bond has the lowest dissociation energy in lignin. Due to lignin's potential to stabilize radicals through mesomerism (Figure 3), multiple pathways open up to continue (but also terminate) the reaction and various intermediate and final products are obtained. The average molecular weight can both increase and decrease due to this complexity (and chosen conditions) and in their experiments, the inventors have typically seen moderate increase of average molecular weight of around 30%.

In one embodiment, component (iii) comprises hydrogen peroxide.

Hydrogen peroxide is perhaps the most commonly employed oxidant due to combination of low price, good efficiency and relatively low environmental impact. When hydrogen peroxide is used without the presence of catalysts, alkaline conditions and temperature are important due to the following reactions leading to radical formation:

$$H_2O_2 + OH^- \rightleftarrows HOO^- + H_2O$$

$$H_2O_2 + OOH^- \rightleftarrows \cdot OH + H_2O + \cdot O_2^-;$$

The present inventors have found that the derivatized lignins prepared with the method according to the present invention contain increased amounts of carboxylic acid groups as a result of the oxidation process. Without wanting to be bound by any particular theory, the present inventors believe that the carboxylic acid group content of the oxidized lignins prepared in the process according to the present invention plays an important role in the desirable reactivity properties of the derivatized lignins prepared by the method according to the present invention.

Another advantage of the oxidation process is that the oxidized lignin is more hydrophilic. Higher hydrophilicity can enhance solubility in water and facilitate the adhesion to polar substrates such as mineral fibers.

**Further Components**

In one embodiment, the method according to the present invention comprises further components, in particular a component (iv) in form of an oxidation catalyst, such as one or more transition metal catalyst, such as iron sulfate, such as manganese, paladium, selenium, tungsten containing catalysts.

Such oxidation catalysts can increase the rate of the reaction, thereby improving the properties of the oxidized lignins prepared by the method according to the present invention.

**Mass Ratios of the Components**

The person skilled in the art will use the components (i), (ii) and (iii) in relative amounts that the desired degree of oxidation of the lignins is achieved.

In one embodiment,

- a component (i) comprises one or more lignins
- a component (ii) comprises ammonia
- a component (iii) comprises one or more oxidation agents in form of hydrogen peroxide,

wherein the mass ratios of lignin, ammonia and hydrogen peroxide are such that the amount of ammonia is 0.01 to 0.5 weight parts, such as 0.1 to 0.3, such as 0.15 to 0.25 weight parts ammonia, based on the dry weight of lignin, and wherein the amount of hydrogen peroxide is 0.025 to 1.0 weight parts, such as 0.05 to 0.2 weight parts, such as 0.075 to 0.125 weight parts hydrogen peroxide, based on the dry weight of lignin.

**Process**

There is more than one possibility to bring the components (i), (ii) and (iii) in contact to achieve the desired oxidation reaction.

In one embodiment, the method comprises the steps of:

- a step of providing component (i) in form of an aqueous solution and/or dispersion of one more lignins, the lignin content of the aqueous solution being 1 to 50 weight-%, such as 5 to 25 weight-%, such as 15 to 22 weight-%, such as 18 to 20 weight-%, based on the total weight of the aqueous solution;

- a pH adjusting step by adding component (ii) comprising an aqueous solution of ammonia, one or more amine components, and/or any salt thereof;
- an oxidation step by adding component (iii) comprising an oxidation agent.

In one embodiment, the pH adjusting step is carried so that the resulting aqueous solution and/or dispersion is having a pH $\geq$ 9, such as $\geq$ 10, such as $\geq$ 10.5.

In one embodiment, the pH adjusting step is carried out so that the resulting aqueous solution and/or dispersion is having a pH in the range of 10.5 to 12.

In one embodiment, the pH adjusting step is carried out so that the temperature is allowed to raise to $\geq$ 25 °C and then controlled in the range of 25 - 50 °C, such as 30 - 45 °C, such as 35 - 40 °C.

In one embodiment, during the oxidation step, the temperature is allowed to raise to $\geq$ 35 °C and is then controlled in the range of 35 - 150 °C, such as 40 - 90 °C, such as 45 - 80 °C.

In one embodiment, the oxidation step is carried out for a time of 1 second to 48 hours, such as 10 seconds to 36 hours, such as 1 minute to 24 hours such as 2 - 5 hours.

**Reaction Product**

The present invention is also directed to oxidized lignins prepared by the method according to the present invention.

The present inventors have surprisingly found, that the oxidized lignins prepared according to the method of the present invention have very desirable reactivity properties and at the same time display improved fire resistance properties when used in products where they are comprised in a binder composition, and improved long term stability over previously known oxidized lignins.

The oxidised lignin also displays improved hydrophilicity.

An important parameter for the reactivity of the oxidized lignins prepared by the method according to the present invention is the carboxylic acid group content of the oxidized lignins.

In one embodiment, the oxidized lignin prepared according to the present invention has a carboxylic acid group content of 0.05 to 10 mmol/g, such as 0.1 to 5 mmol/g, such as 0.20 to 1.5 mmol/g, such as 0.40 to 1.2 mmol/g, such as 0.45 to 1.0 mmol/g, based on the dry weight of component (i).

Another way to describe the carboxylic acid group content is by using average carboxylic acid group content per lignin macromolecule according to the following formula:

$$Average\ COOH\ functionality = \frac{total\ moles\ COOH}{total\ moles\ lignin}$$

In one embodiment, the oxidized lignin prepared according to the present invention has an average carboxylic acid group content of more than 1.5 groups per macromolecule of component (i), such as more than 2 groups, such as more than 2.5 groups.

**Use of the Oxidized Lignins**

In view of the properties described above, the oxidized lignins prepared by the method according to the present invention can be used for many purposes.

One such use is the use as a component in a binder composition for different purposes, like foundry sand, glass fibre tissue, composites, moulded articles, coatings, such as metal adhesives.

A particularly preferred use is the use as a component in an aqueous binder composition for mineral fibres.

The following examples are intended to further illustrate the invention without limiting it's scope.

## Examples

Example A - lignin oxidation in ammonia aqueous solution by hydrogen peroxide:

The amounts of ingredients used according to the example A are provided in table A 1.1 and A 1.2
During the development of the method according to present invention, the inventors have first started with lab-scale experiments which were performed in the scale of approximately 1 L.

Although kraft lignin is soluble in water at relatively high pH, it is known that at certain weight percentage the viscosity of the solution will strongly increase. It is typically believed that the reason for the viscosity increase lies in a combination of strong hydrogen bonding and interactions of n-electrons of numerous aromatic rings present in lignin. For kraft lignin an abrupt increase in viscosity around 21-22 wt.-% in water was observed and 19 wt.-% of kraft lignin were used in the example presented.

Ammonia aqueous solution was used as base in the pH adjusting step. The amount was fixed at 4 wt.-% based on the total reaction weight. The pH after the pH adjusting step and at the beginning of oxidation was 10.7.

Table A 2 shows the results of CHNS elemental analysis before and after oxidation of kraft lignin. Before the analysis, the samples were heat treated at 160 °C to remove adsorbed ammonia. The analysis showed that a certain amount of nitrogen became a part of the structure of the oxidized lignin during the oxidation process.

During testing in batch experiments it was determined that it is beneficial for the oxidation to add the entire amount of hydrogen peroxide during small time interval contrary to adding the peroxide in small portions over prolonged time period. In the present example 2.0 wt.-% of $H_2O_2$ based on the total reaction weight was used.

The oxidation is an exothermic reaction and increase in temperature is noted upon addition of peroxide. In this example, temperature was kept at 60 °C during three hours of reaction.

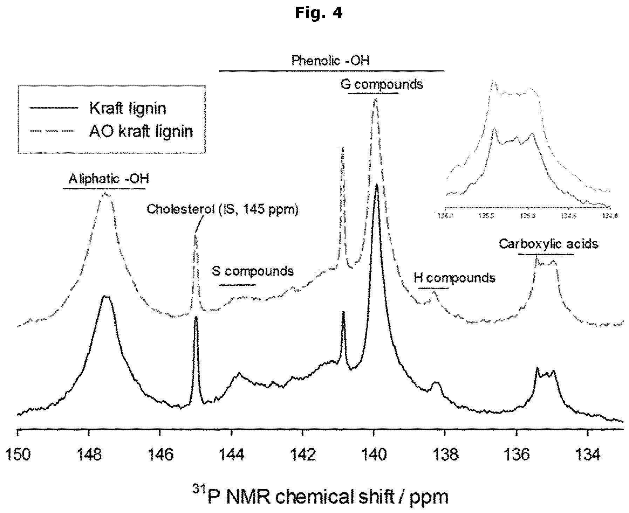

After the oxidation, the amount of lignin functional groups per gram of sample increased as determined by $^{31}$P NMR and aqueous titration. Sample preparation for $^{31}$P NMR was performed by using 2-chloro-4,4,5,5-tetramethyl-1,3,2-dioxaphospholane (TMDP) as phosphitylation reagent and cholesterol as internal standard. NMR spectra of kraft lignin before and after oxidation are shown on Figure 4 and the results are summarized in table A 3.

Figure 4 shows $^{31}$P NMR of kraft lignin and ammonia oxidized kraft lignin (AOL). The different hydroxyl groups, as well as the internal standard, are shown in the plot, where S, G and H refer to syringyl, guaiacyl and coumaryl (hydroxyphenyl), respectively. The insert shows the signals from carboxyl groups without off-set. The change in COOH groups was also determined by aqueous titration and utilization of the following formula:

$$C_{(COOH,mmol/g)} = \frac{(V_{2s,ml} - V_{1s,ml}) - (V_{2b,ml} - V_{1b,ml}) * C_{acid,mol/l}}{m_{s,g}}$$

Where $V_{2s}$ and $V_{1s}$ are endpoint volumes of a sample while $V_{2b}$ and $V_{1b}$ are the volume for the blank. $C_{acid}$ is 0.1M HCl in this case and $m_s$ is the weight of the sample. The values obtained from aqueous titration before and after oxidation are shown in table A 4.

The average COOH functionality can also be quantified by a saponification value which represents the number of mg of KOH required to saponify 1 g lignin. Such a method can be found in AOCS Official Method Cd 3-25.

Average molecular weight was also determined before and after oxidation with a PSS PolarSil column (9:1 (v/v) dimethyl sulphoxide/water eluent with 0.05 M LiBr) and UV detector at 280nm. Combination of COOH concentration and average molecular weight also allowed calculating average carboxylic acid group content per lignin macromolecule and these results are shown in table A 5.

Example B - upscaling the lignin oxidation in ammonia by hydrogen peroxide to pilot scale

Lignin oxidation with hydrogen peroxide is an exothermic process and even in lab-scale significant temperature increases were seen upon addition of peroxide. This is a natural concern when scaling up chemical processes since the amount of heat produced is related to dimensions in the 3$^{rd}$ power (volume) whereas cooling normally only increase with dimension squared (area). In addition, due to the high viscosity of the adhesive intermediates process equipment has to be carefully selected or designed. Thus, the scale up was carefully engineered and performed in several steps.

The first scale up step was done from 1 L (lab scale) to 9 L using a professional mixer in stainless steel with very efficient mechanical mixing The scale-up resulted only in a slightly higher end temperature than obtained in lab scale, which was attributed to efficient air cooling of the reactor and slow addition of hydrogen peroxide.

The next scale up step was done in a closed 200 L reactor with efficient water jacket and an efficient propeller stirrer. The scale was this time 180 L and hydrogen peroxide was added in two steps with appr. 30 minute separation.

This up-scaling went relatively well, though quite some foaming was an issue partly due to the high degree reactor filling. To control the foaming a small amount of food grade defoamer was sprayed on to the foam. Most importantly the temperature controllable and end temperatures below 70 °C were obtained using external water-cooling.

The pilot scale reactions were performed in an 800 L reactor with a water cooling jacket and a twin blade propeller stirring. 158 kg of lignin (UPM LignoBoost TM BioPiva 100) with a dry-matter content of 67 wt.-% was de-lumped and suspended in 224 kg of water and stirred to form a homogenous suspension. With continued stirring 103 kg of 25% ammonia in water was pumped into the reactor and stirred another 2 hours to from a dark viscous solution of lignin.

To the stirred lignin solution 140 kg of 7.5wt.-% at 20-25 °C hydrogen peroxide was added over 15 minutes. Temperature and foam level was carefully monitored during and after the addition of hydrogen peroxide and cooling water was added to the cooling jacket in order to maintain an acceptable foam level and a temperature rise less than 4 °C per minute as well as a final temperature below 70 °C. After the temperature increase had stopped, cooling was turned off and the product mixture was stirred for another 2 hours before transferring to transport container.

Based on the scale up runs it could be concluded that even though the reactions are exothermic a large part of the reaction heat is actually balanced out by the heat capacity of the water going from room temperature to about 60 °C, and only the last part has to be removed by cooling. It should be noted that due to this and due to the short reaction time this process would be ideal for a scale up and process intensification using continuous reactors such as in-line mixers, tubular reactors or CSTR type reactors. This would ensure good temperature control and a more well-defined reaction process.

Tests of the scale up batches indicated the produced oxidized lignin had properties in accordance to the batches produced in the lab.

### Table A 1.1

The amounts of materials used in their supplied form:

| material | wt.-% |
| --- | --- |
| UPM BioPiva 100, kraft lignin | 28 |
| $H_2O_2$, 30 wt.-% solution in water | 6.6 |
| $NH_3$, 25wt.-%, aqueous solution | 16 |
| water | 49.4 |

### Table A 1.2

The amounts of active material used:

| material | wt.-% |
| --- | --- |
| kraft lignin | 19 |
| $H_2O_2$ | 2 |
| $NH_3$ | 4 |
| water | 75 |

### Table A 2

Elemental analysis of kraft lignin before and after oxidation:

| sample | N (wt.-%) | C (wt.-%) | H (wt.-%) | S (wt.-%) |
| --- | --- | --- | --- | --- |
| kraft lignin | 0.1 | 64.9 | 5.8 | 1.7 |
| ammonia oxidized kraft lignin | 1.6 | 65.5 | 5.7 | 1.6 |

**Table A 3**

Kraft lignin functional group distribution before and after oxidation obtained by $^{31}$P-NMR:

| sample | Concentration (mmol/g) | | |
|---|---|---|---|
| | Aliphatic OH | Phenolic OH | Acid OH |
| kraft lignin | 1.60 | 3.20 | 0.46 |
| ammonia oxidized kraft lignin | 2.11 | 3.60 | 0.80 |

**Table A 4**

COOH group content in mmol/g as determined by aqueous titration:

| sample | COOH groups (mmol/g) |
|---|---|
| kraft lignin | 0.5 |
| oxidized kraft lignin | 0.9 |

**Table A 5**

Table A 5. Number (Mn) and weight (Mw) average molar masses as determined by size exclusion chromatography expressed in g/mol together with average carboxylic acid group content per lignin macromolecule before and after oxidation

| sample | Mn, g/mol | Mw, g/mol | average COOH functionality |
|---|---|---|---|
| kraft lignin | 1968 | 21105 | 0.9 |
| ammonia oxidized kraft lignin | 2503 | 34503 | 2.0 |

## Claims

1. A method for producing oxidized lignins comprising bringing into contact

   - a component (i) comprising one or more lignins
   - a component (ii) comprising ammonia and/or one or more amine components, and/or any salt thereof.
   - a component (iii) comprising one or more oxidation agents.

2. A method according to claim 1, wherein component (i) comprises one or more kraft lignins, one or more soda lignins, one or more lignosulfonate lignins, one or more organosolv lignins, one or more lignins from biorefining processess of lignocellulosic feedstocks, or any mixture thereof.

3. A method according to claim 1 or 2, wherein component (i) comprises one or more kraft lignins.

4. A method according to any of the preceding claims, wherein component (ii) is ammonia and/or a salt thereof.

5. A method according to any of the preceding claims, whereby component (ii) additionally comprises an alkali and/or earth alkali metal hydroxide, such as sodium hydroxide and/or potassium hydroxide.

6. A method according to any of the preceding claims, wherein component (iii) comprises one or more oxidation agents in form of hydrogen peroxide, organic or inorganic peroxides, molecular oxygen, ozone, halogen containing oxidation agents, or any mixture thereof.

7. A method according to any of the preceding claims, comprising the bringing into contact of components (i), component (ii), component (iii) and a component (iv) in form of an oxidation catalyst, such as one or more transition metal catalysts, such as an iron containing catalyst, such as iron sulfate, such as manganese, paladium, selenium, tungsten containing catalysts.

8. A method according to any of the preceding claims, wherein

   - a component (i) comprises one or more lignins
   - a component (ii) comprises ammonia
   - a component (iii) comprises one more oxidation agents in form of hydrogen peroxide,

   wherein the mass ratios of lignin, ammonia and hydrogen peroxide are such that the amount of ammonia is 0.01 to 0.5 weight parts, such as 0.1 to 0.3, such as 0.15 to 0.25 weight parts ammonia, based on the dry weight of lignin, and wherein the amount of hydrogen peroxide is 0.025 to 1.0 weight parts, such as 0.05 to 0.2 weight parts, such as 0.075 to 0.125 weight parts hydrogen peroxide, based on the dry weight of lignin.

9. A method according to any of the preceding claims, wherein the method comprises the steps of:

   - a step of providing component (i) in form of an aqueous solution and/or dispersion of one more lignins, the lignin content of the aqueous solution being 1 to 50 weight-%, such as 5 to 25 weight-%, such as 15 to 22 weight-%, such as 18 to 20 weight-%, based on the total weight of the aqueous solution;
   - a pH adjusting step by adding component (ii) comprising an aqueous solution of ammonia, one or more amine components, and/or any salt thereof;
   - an oxidation step by adding component (iii) comprising an oxidation agent.

10. Method according to claim 9, wherein the pH adjusting step is carried out so that the reaction mixture is having a pH $\geq$ 9, such as $\geq$ 10, such as $\geq$ 10.5.

11. Method according to any of the claims 9 - 10, wherein during the oxidation step, the temperature is allowed to raise to more than 35 °C and is then controlled in the range of 35 - 150 °C, such as 40 - 90 °C, such as 45 - 80 °C.

12. Method according to any of the claims 9 - 11, wherein the oxidation step is carried out for a time of 1 seconds to 48 hours, such as 10 seconds to 36 hours, such as 1 minutes to 24 hours, such as 30 minutes to 10 hours, such as 2 to 5 hours.

13. Oxidized lignin prepared by a method according to any of the preceding claims.

14. Oxidised lignin according to claim 13 having a carboxylic acid group content of 0.05 to 10 mmol/g, such as 0.1 to 5 mmol/g, such as 0.20 to 1.5 mmol/g, such as 0.40 to 1.2 mmol/g, such as 0.45 to 1.0 mmol/g, based on the dry weight of component (i).

15. Oxidised lignin according to claim 13 or 14 having an average carboxylic acid group content of more than 1.5 groups per macromolecule of component (i), such as more than 2 groups, such as more than 2.5 groups.

16. Oxidised lignin according to any of claims 13 - 15 comprising ammonia-oxidized lignin (AOL).

17. Use of the oxidized lignin according to any of claims 13 - 16 as a component in a binder composition, such as an aqueous binder composition for mineral fibers.

**Fig. 1**

## Fig. 2

**Lignin precursors**

p-coumaryl    coniferyl    sinapyl

p-hydroxyphenyl    guaiacyl    syringyl
(H)    (G)    (S)

**Common interunit linkages**

β-O-4'    α-O-4'    β-β'

β-5'    β-1'    5-5'

## Fig. 3

**Fig. 4**

Europäisches
Patentamt

European
Patent Office

Office européen
des brevets

# EUROPEAN SEARCH REPORT

**Application Number**

EP 18 19 8997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 238 475 B1 (GARGULAK JERRY D [US] ET AL) 29 May 2001 (2001-05-29) | 1-6,8-16 | INV.<br>C08H7/00 |
| Y | * example 5 * | 7,17 | |
| X | MASOUMEH GHORBANI ET AL: "Ammoxidized Fenton-Activated Pine Kraft Lignin Accelerates Synthesis and Curing of Resole Resins", POLYMERS, vol. 9, no. 12, 28 January 2017 (2017-01-28), page 43, XP55574267, DOI: 10.3390/polym9020043 | 1-4,6, 13-16 | |
| Y | * page 54, paragraph 2.2.1. - page 55 * | 17 | |
| X | Dietrich Meier ET AL: "Conversion of technical lignins into slow-release nitrogenous fertilizers by ammoxidation in liquid phase", Bioresource Technology, 1 January 1994 (1994-01-01), pages 121-128, XP55574278, DOI: 10.1016/0960-8524(94)90075-2 Retrieved from the Internet: URL:http://www.isca.in/IJENS/Archive/v4/i6/15.ISCA-IRJEvS-2015-086.pdf | 1-4,6-13 | |
| Y | * page 95, column 2, paragraph 2; figure 2 * | 7 | **TECHNICAL FIELDS SEARCHED (IPC)**<br><br>C08H |

The present search report has been drawn up for all claims

| Place of search | Date of completion of the search | Examiner |
|---|---|---|
| Munich | 26 March 2019 | Friedrich, Christof |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&.........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 19 8997

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2019

| Patent document cited in search report | | Publication date | Patent family member(s) | Publication date |
|---|---|---|---|---|
| US 6238475 | B1 | 29-05-2001 | NONE | |

EPO FORM P0459

For more details about this annex : see Official Journal of the European Patent Office, No. 12/82